# NEUE EUROPÄISCHE PATENTSCHRIFT

(11) **EP 2 038 103 B2**
(45) Veröffentlichungstag und Bekanntmachung des Hinweises auf die Entscheidung über den Einspruch: **26.12.2018**
(45) Hinweis auf die Patenterteilung: 25.02.2015
(21) Anmeldenummer: 07725965.3
(22) Anmeldetag: 12.06.2007
(51) Int. Cl.: B29C 49/20, B29C 51/12, B29C 69/00, B29C 49/04, B29L 31/30

(54) **VERFAHREN ZUR HERSTELLUNG VON HOHLKÖRPERN AUS THERMOPLASTISCHEM KUNSTSTOFF MIT EINLEGETEILEN AN DER INNENSEITE**
METHOD FOR PRODUCING HOLLOW BODIES FROM THERMOPLASTIC PLASTIC WITH INSERTS ON THEIR INNER FACES
PROCEDE DE FORMAGE POUR PRODUIRE DES CORPS CREUX EN THERMOPLASTIQUE AVEC DES PIÈCES D'INSERTION SUR LA FACE INTÉRIEURE

(30) Priorität: 07.07.2006 DE 102006031902
(43) Veröffentlichungstag der Anmeldung: 25.03.2009
(73) Patentinhaber: Kautex Textron GmbH & Co. KG, 53229 Bonn (DE)
(72) Erfinder: BORCHERT, Matthias, 53179 Bonn (DE); EULITZ, Dirk, 53115 Bonn (DE); WOLTER, Gerd, 53639 Königswinter (DE); KRÄMER, Timo, 57635 Hirz-Maulsbach (DE); LORENZ, Harald, 53474 Bad Neuenahr-Ahrweiler (DE); HÜTZEN, Markus, 51544 Waldbröl/Hermesdorf (DE)
(74) Vertreter: Richly & Ritschel Patentanwälte PartG mbB
(86) Internationale Anmeldenummer: PCT/EP2007/005152
(87) Internationale Veröffentlichungsnummer: WO 2008/003387

(56) Entgegenhaltungen:
- EP-A- 1 006 014
- EP-A- 1 238 845
- EP-A- 1 334 817
- EP-A1- 1 759 827
- EP-A2- 1 110 697
- WO-A-2005/118255
- WO-A1-2006/032672
- WO-A1-2006/064004
- DE-A1- 10 010 900
- DE-A1- 19 627 742
- GB-A- 2 236 288
- JP-A- H06 141 521
- JP-A- 2003 251 684

## Beschreibung

Die Erfindung betrifft ein Verfahren gemäß Oberbegriff von Anspruch 1.

Die Erfindung betrifft insbesondere ein Verfahren zum Extrusionsblasformen von thermoplastischem Kunststoff zu einstückigen Hohlkörpern, insbesondere zu Kraftstoffbehältern aus Kunststoff für Kfz.

Es ist grundsätzlich bekannt, das Extrusionsblasformen von Hohlkörpern mittels bahn- oder bänderförmiger Extrudate durchzuführen. Diese können beispielsweise durch Extrusion eines schlauchförmigen Vorformlings erhalten worden sein, der in Bänder oder Bahnen aufgeschnitten oder getrennt wurde. Ebenso ist die Extrusion von bahn- und bänderförmigen Extrudaten ohne Umweg über die Schlauchform bekannt. Die Vorformlinge werden entweder mittels Manipulator am Extruder abgenommen und dem Werkzeug zugeführt oder unmittelbar zwischen die geöffneten Teile eines Werkzeugs extrudiert.

Bei der Herstellung von Kraftfahrzeugtanks oder anderen größeren Behältern, die mit Ein- und Anbauten versehen sind, wird normalerweise derart verfahren, dass ein schlauchförmiger Vorformling in Form eines mehrschichtigen Extrudats hängend extrudiert wird, entweder kontinuierlich oder diskontinuierlich, wobei das Extrudat nach Ausstoß auf die vorgegebene Länge unmittelbar innerhalb eines aus zwei Blasformhälften gebildeten Werkzeugs umgeformt wird. Die Aufweitung des Vorformlings erfolgt durch Gasdruckbeaufschlagung innerhalb der geschlossenen Blasform.

Sollen in dem Kraftstoffbehälter Einbauteile, wie beispielsweise Schwalleinbauten, Kraftstoffpumpen, Geber, Schlingertöpfe und dergleichen eingebracht werden, so können diese entweder bei der Herstellung des Hohlkörpers mit umblasen werden oder durch an dem Behälter vorgesehenen Montageöffnungen nachträglich in den fertigen Behälter eingesetzt werden. Letztere Verfahrensweise ist aus verschiedenen Gründen weniger wünschenswert. Aus Emissionsgründen sollen nämlich möglichst Öffnungen und Auskreisungen in der Behälterwandung vermieden werden oder so klein wie möglich gehalten werden. Darüber hinaus ist der manuelle Monatageaufwand an einem so hergestellten Kraftstoffbehälter verhältnismäßig groß.

Das Einbringen solcher Einbauten gestaltet sich insbesondere dann schwierig, wenn der Kraftstoffbehälter verhältnismäßig zerklüftet ist, d. h. eine räumliche komplexe Gestalt aufweist.

Als Alternative zu einstückigen extrusionsblasgeformten Behältern ist daher die Möglichkeit bekannt, solche Behälter, wie beispielsweise Kraftstoffbehälter, aus zwei spritzgegossenen oder tiefgezogenen Halbschalen herzustellen. Diese Vorgehensweise bietet den Vorzug, dass Einbauten in die geöffneten Halbschalen eingesetzt werden können. Anschließend werden die beiden Halbschalen zum geschlossenen Behälter miteinander verschweißt. Die Montage von Einbauten kann in diesem Falle weitestgehend automatisiert werden. Problematisch sind bei so hergestellten Kraftstoffbehältern die Schweißnähte an den Verbindungsstellen der Halbschalen. Diese stellen potentielle Leckagestellen des Behälters für gasförmige Kohlenwasserstoffe dar und erfordern zusätzliche Einrichtungen zur Herstellung der Schweißverbindungen.

Grundsätzlich böte sich auch die Möglichkeit, bei der Herstellung von Behältern durch Extrusionsblasformen zweier oder mehrerer bahn- oder bänderförmiger Vorformlinge mittels entsprechender Manipulatoren, Einbauteile im Inneren des Behälters zu platzieren. Dies ist allerdings relativ aufwendig, wenn solche Einbauteile in den Behälter eingebracht werden sollen, die sich über den gesamten Querschnitt des Behälters erstrecken oder gar die gegenüberliegenden Innenwandungen des Behälters miteinander verbinden sollen. Hierzu bietet es sich an, die Behälter aus vorgefertigten, beispielsweise spritzgegossenen oder tiefgezogenen Halbschalen zusammenzusetzen.

Ein Verfahren nach dem Oberbegriff aus Anspruch 1 ist in WO 2005/118255 A1 offenbart.

Ein anderes Verfahren zur Herstellung von schalenförmigen Formteilen oder Hohlkörpern aus thermoplastischem Kunststoff wird in EP 1 334 817 A1 offenbart.

In DE 100 10 900 A1 wird ein Verfahren zur Herstellung von Hohlkörpern aus thermoplastischem Kunststoff offenbart. Dort wird ein kombiniertes Extrusions-Pressverfahren beschrieben, welches die Herstellung von Kunstoffbehältern mit beim Blasformen üblichen Kunststoffen und definierter Wanddicke ermöglicht, wobei auch komplizierte Formen technisch einfach herstellbar sind. Dazu wird während eines zusätzlichen Verfahrensschritts ein Vorformling beim Ausstoßen in Vorhänge geschnitten, die dann zwischen dem Kern und den äußeren Formhälften gepresst und in gleicher Form verschweißt werden. Mit diesem Verfahren wird der positionsgenaue Einbau von Systemteilen prozesssicher ermöglicht. Der Einbau von Systemteilen beschränkt sich aber im Vergleich zum Volumen des Hohlkörpers auf kleine Teile.

Ein wiederum anderes Verfahren wird in EP 1 238 845 A2 beschrieben. Hier wird die Herstellung eines Kraftstofftanks offenbart, wobei dieser aus einer Außenwand, hergestellt durch Blasformen, und zusätzlichen Trennwänden innerhalb des Tanks besteht. An diesen Trennwänden können funktionale Komponenten montiert werden.

Der Erfindung liegt daher die Aufgabe zugrunde, ein neues Verfahren zur Herstellung von Hohlkörpern aus thermoplastischem Kunststoff mit einer räumlich komplexen und nahezu beliebigen Anordnung von Einbauten über den gesamten Querschnitt des fertigen Behälters zu verwirklichen.

Die Aufgabe wird gelöst durch ein Verfahren zur Herstellung von Hohlkörpern aus thermoplastischem Kunststoff, bei dem Vorformlinge aus plastifiziertem Kunststoff in einem mehrteiligen, ein Formnest bildenden Werkzeugs durch Aufweiten und Anlegen der Vorformlinge an die Innenkontur des Formnestes umgeformt werden, wobei das Verfahren zunächst die Ausbildung zweier zueinander komplementärer Zwischenerzeugnisse in Form von Schalen umfasst und an den jeweils in Einbaulage einander zugekehrten Innenseiten der Schalen jeweils wenigstens ein Einbauteil befestigt wird, dadurch gekennzeichnet, dass als Vorformling bahn- oder bänderförmige Vorformlinge verwendet werden und wenigstens einige Einbauteile zueinander komplementärer Schalen jeweils komplementär zueinander ausgebildet sind, in dem Sinne, dass sie zu einem zusammengesetzten Bauteil oder zu einer Funktionseinheit verbindbar sind, und weiterhin die Schalen so zusammengefügt werden, dass die zueinander komplementären Einbauteile beim Zusammenführen der Schalen ineinander greifen und/oder in Wirkverbindung miteinander gelangen.

Die Erfindung lässt sich dahingehend zusammenfassen, dass beim Extrusionsblasformen von Hohlkörpern aus Bändern oder Bahnen aus einem thermoplastischem Extrudat während der Ausformung des Hohlkörpers bzw. während der Umformung der bahnförmigen Extrudate Einbauteile in die jeweils Zwischenerzeugnisse bildenden Schalen eingesetzt werden, wobei die Einbauteile so positioniert sind und so beschaffen sind, dass sie beim Zusammenführen der Schalen so ineinander greifen und/oder in Wirkverbindung miteinander gebracht werden, dass eine räumlich komplexe und nahezu beliebige Anordnung von Einbauten über den gesamten Querschnitt des fertigen Behälters möglich ist.

Besonders zweckmäßig ist es, wenn das Herstellen und Verbinden der Schale in der ersten Hitze erfolgt, d. h. ohne weitere Erwärmung der Vorformlinge.

Auf diese Art und Weise ist es beispielsweise möglich, in besonders einfacher Art und Weise Verstrebungen, Schwalleinbauten oder Leitungen in den Behälter einzubringen, wobei Letztere sich über den gesamten Querschnitt des Behälters erstrecken können. Verstrebungen dienen beispielsweise dazu, Verformungen des Behälters aufgrund von Über- oder Unterdruck entgegenzuwirken.

Auch können die Behälterwandungen über Verstrebungen miteinander verbunden werden, ohne dass es hierzu erforderlich wäre, durch entsprechende Schieber im Werkzeug Wand-zu-Wand-Verschweißungen zu erzeugen.

Eine solche Ausstattung des Behälters kann ausschließlich mittels zusätzlicher Einbauteile in dem Behälter erfolgen. Die Gestaltung der Werkzeuge kann entsprechend einfacher ausfallen, es können beispielsweise hierdurch Schieber eingespart werden.

Bevorzugt werden die Vorformlinge in einem mehrteiligen Formwerkzeug umgeformt, welches wenigstens zwei Außenformen und wenigstens eine Mittelform umfasst, die zueinander eine Öffnungs- und Schließbewegung vollziehen, wobei die Außenformen jeweils die die Konturen der Schalen vorgebenden Teilkavitäten bilden und die Mittelform mit wenigstens einem Bauteilhalter versehen ist, bei welchen nach dem Ausformen der Schalen die Einbauteile an den Innenseiten der Schalen platziert bzw. befestigt werden.

In einer Ausgestaltung der Erfindung ist vorgesehen, dass die Mittelform nach dem Platzieren der Einbauteile zwischen den Außenformen entfernt wird und anschließend die Außenformen so gegeneinander geschlossen werden, dass die Schalen und wenigstens einige der in diesen angeordneten Einbauteile miteinander in Wirkverbindung gelangen.

Beispielsweise können als zueinander komplementäre Einbauteile den Hohlkörper stabilisierende Verstrebungselemente Anwendung finden, die bei Verbindung der Halbschalen miteinander verrastet werden.

Alternativ können als zueinander komplementäre Einbauteile Halteelemente Anwendung finden, die jeweils Kupplungen von elektrischen Leitungen und Fluidleitungen aufnehmen, wobei die Anordnung umfassend jeweils ein Halteelement und einen Leitungsabschnitt mit Kupplung so auf der Innenseite der Schalen platziert werden, dass die Kupplungen beim Zusammenfügen der Schalen ineinander greifen.

Auch ist es möglich, als zueinander komplementäre Einbauteile Schwalleinbauten, vorzugsweise in Form von ineinander greifenden Schwallwänden oder Schwallwandanordnungen zu verwenden.

Die Erfindung wird nachstehend anhand zweier Ausführungsbeispiele unter Bezugnahme auf die beigefügten Zeichnungen erläutert werden.

Es zeigen:
Figuren 1 bis 12: schematische Darstellungen der einzelnen Schritte des Herstellungsverfahrens,
Figuren 13 und 14: schematische Darstellungen zueinander komplementärer Halteelemente mit von diesen aufgenommenen Kupplungen außer Eingriff und in Wirkverbindung miteinander und
Figuren 15 und 16: einen Zuganker, der aus zwei zueinander komplementären Elementen besteht, die beim Schließen der Form beim Zusammensetzen der Schalen miteinander in Eingriff gebracht werden.

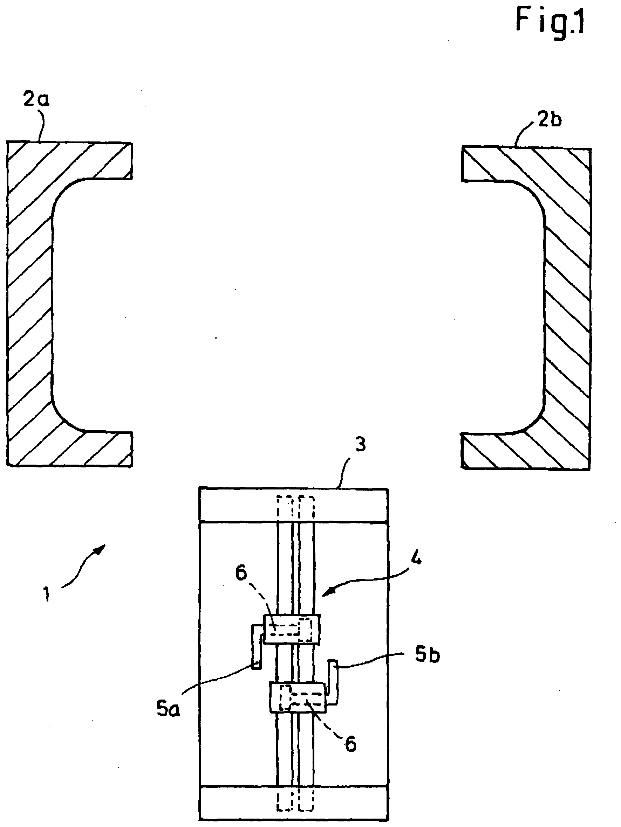

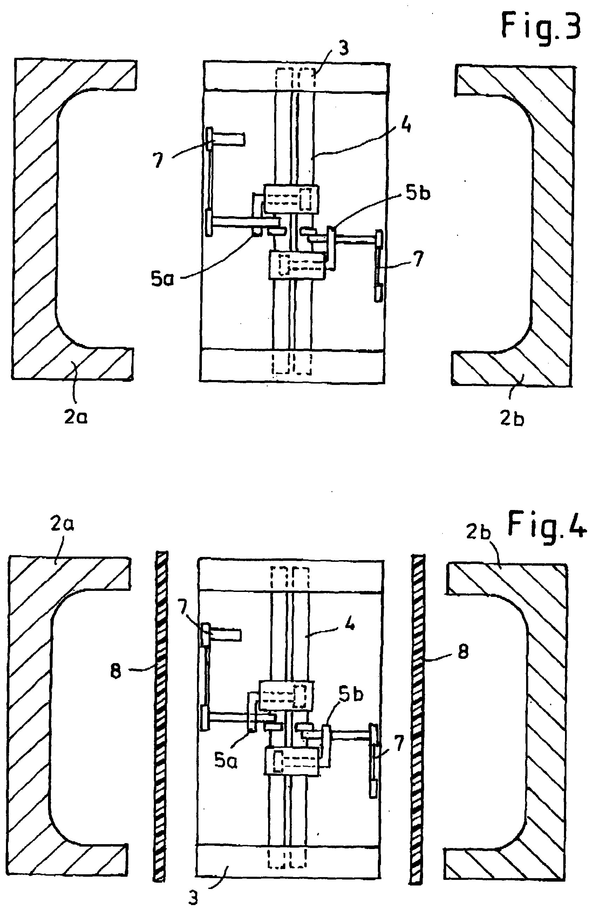

In den Figuren 1 bis 12 ist das mit 1 bezeichnete Werkzeug im Querschnitt schematisch während verschiedene Phasen des erfindungsgemäßen Verfahrens dargestellt. Das in den Figuren mit 1 bezeichnete Werkzeug ist dreiteilig ausgebildet und umfasst zwei Außenformen 2a, 2b sowie eine Mittelform 3. Die Außenformen 2a, 2b sind voneinander weg und aufeinander zu im Sinne einer Öffnungs- und Schließbewegung verstellbar. Die Mittelform 3 ist bezüglich der Außenformen 2a, 2b quer zur Öffnungs- und Schließbewegung der Außenformen 2a, 2b verfahrbar. Die Formen sind in bekannter Art und Weise jeweils an bekannten und der Einfachheit halber nicht dargestellten Formaufspannplatten befestigt. Letztere sind verschiebbar bzw. verfahrbar in einem ebenfalls nicht dargestellten Schließgestell angeordnet. Eine Extrusionseinrichtung zur Erzeugung von bahnförmigen oder bänderförmigen Vorformlingen 8 ist ebenfalls aus Vereinfachungsgründen nur andeutungsweise dargestellt. Beispielsweise können unter Bezugnahme auf Figur 1 zwei geeignete Extrusionsköpfe mit Breitschlitzdüsen oberhalb des Werkzeugs 1 auf der dem Betrachter zugewandten Seite außerhalb der Zeichnungsebene angeordnet sein. Ebenso ist es möglich, einen schlauchförmigen Vorformling während oder unmittelbar nach der Extrusion durch geeignete Werkzeuge in zwei Bahnen aufzuteilen und diese Bahnen mittels eines Manipulators dem Werkzeug 1 zuzuführen.

Innerhalb der Mittelform 3 ist ein Träger 4 angeordnet, auf dem bei dem dargestellten Ausführungsbeispiel der Einfachheit halber nur zwei verstellbare Bauteilhalter 5a, 5b vorgesehen sind, die über pneumatische Zylinder 6 bezüglich des Trägers 4 verstellbar sind. Die Anwendung von hydraulischen Zylindern ist alternativ möglich.

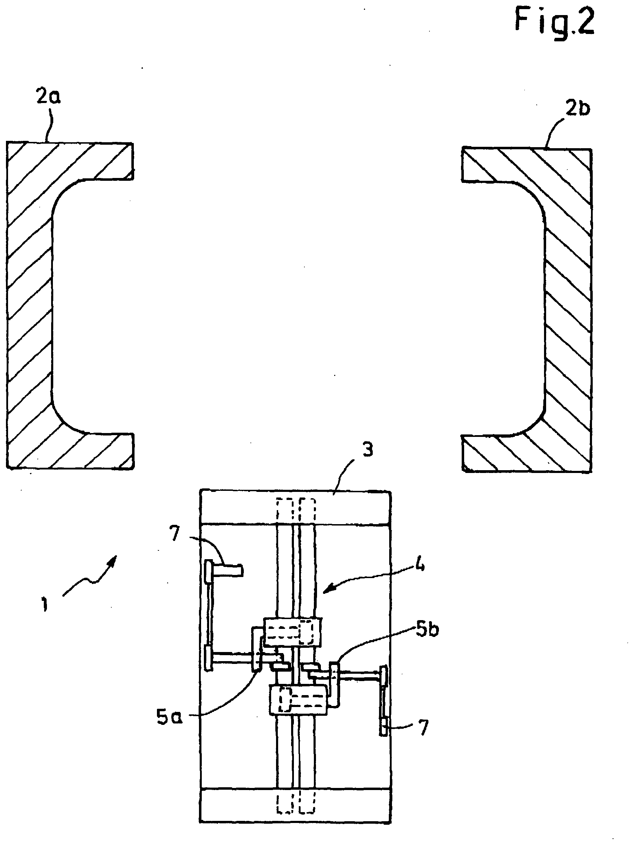

In der in Figur 1 dargestellten Ansicht befindet sich die Mittelform 3 in ausgefahrener Stellung, diese lässt sich quer zu der mit Pfeilen angedeuteten Öffnungs- und Schließbewegung der Außenformen 2a, 2b verschieben. In dieser Stellung werden die Bauteilhalter 5a, 5b mit Einbauteilen 7 (Figur 2) bestückt. In einem weiteren Verfahrensschritt wird die Mittelform 3 zwischen die Außenformen 2a, 2b verfahren. Sodann werden zwei bahnförmige Vorformlinge 8 jeweils zwischen die Mittelform 3 und die zueinander geöffneten Außenformen 2a, 2b eingebracht. Dies kann, wie eingangs bereits erwähnt, durch Extrusion aus Breitschlitzdüsen erfolgen, die oberhalb des Werkzeugs 1, d. h. in den Figuren oberhalb der Zeichnungsebene, angeordnet sind. Alternativ hierzu ist es möglich, den oder die Extruder räumlich entfernt vom Werkzeug 1 anzuordnen und die Extrudate bzw. Vorformlinge 8 mittels eines geeigneten Greifers zwischen die geöffneten Teile des Werkzeugs 1 zu transportieren.

Zur Herstellung eines Kraftstoffbehälters ist es beispielsweise vorgesehen, dass die Vorformlinge 8 jeweils aus einem sechsschichtigen Co-Extrudat mit Barriereschichten für Kohlenwasserstoffe bestehen. Ein geeignetes Barrierematerial ist beispielsweise EVOH (Ethylen-Vinyl-Alkohol-Copolymer).

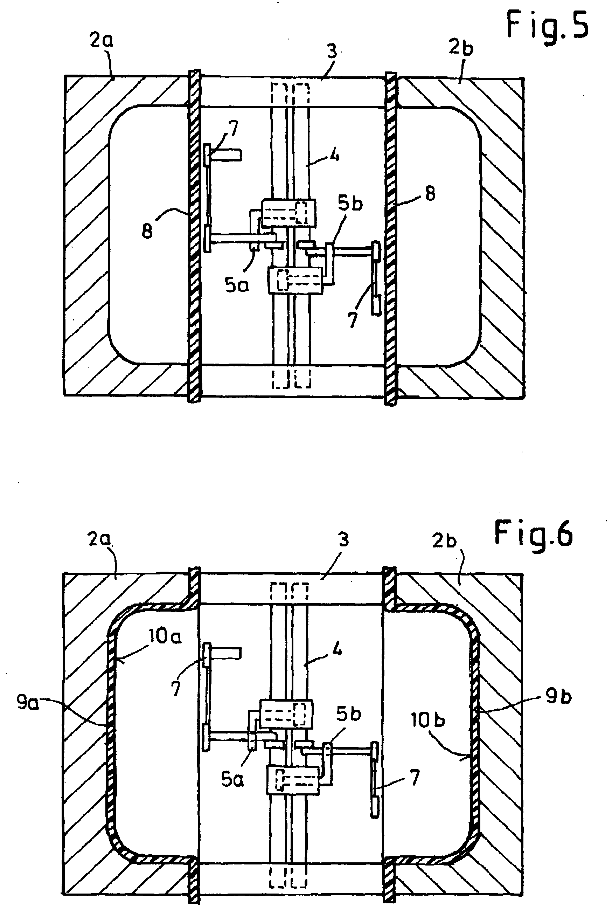

Sobald die Vorformlinge in der gewünschten Länge jeweils zwischen den Außenformen 2a, 2b und der Mittelform 3 angeordnet sind, werden die Außenformen 2a, 2b bezüglich der Mittelform 3 geschlossen. Sodann werden die Vorformlinge 8 mittels Gasdruckbeaufschlagung im Formnest (siehe Figur 6) so aufgeweitet, dass sie sich jeweils an die Teilkavitäten 9a, 9b der Werkzeuge 2a, 2b anlegen.

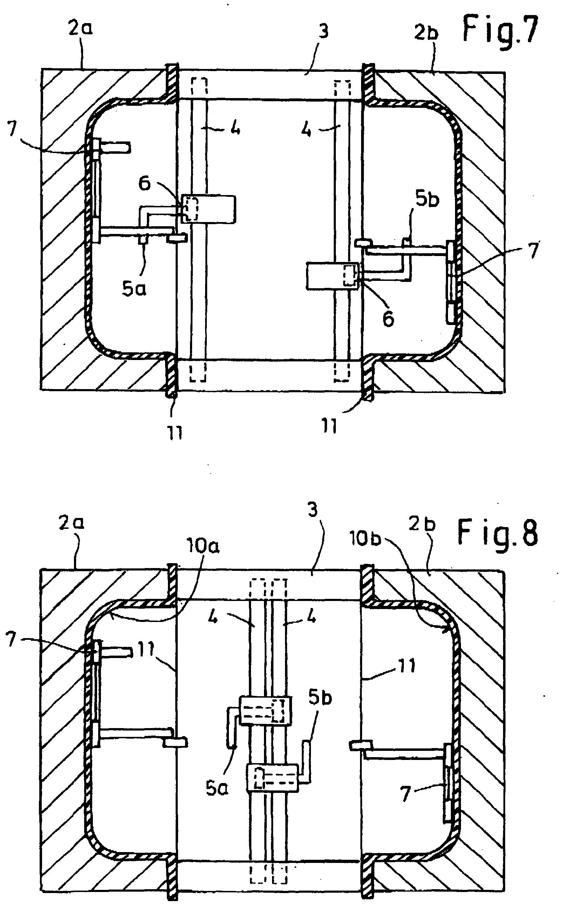

Wie dies insbesondere der Figur 7 zu entnehmen ist, ist der Träger 4 zweiteilig ausgebildet, wobei die beiden Teile des Trägers 4 in einem nächsten Verfahrensschritt auseinandergefahren werden, und zwar jeweils in Richtung auf die Außenformen 2a, 2b. Die auf den Bauteilhaltern 5a, 5b angeordneten Einbauteile 7 werden schließlich durch Beaufschlagung der Pneumatikzylinder 6 an die Innenwandung der nun ausgebildeten Schalen 10a, 10b gepresst. Es gibt diverse Möglichkeiten, die Einbauteile 7 mit der noch plastischen Innenwand der Schale 10a, 10b zu verbinden. Denkbar ist hier eine stoffschlüssige und/oder eine kraftschlüssige Verbindung. Stoffschluss wird beispielsweise durch Verschweißen der Einbauteile 7 mit der Innenwandung oder auch durch Kleben erzielt. Da mit dem erfindungsgemäßen Verfahren in einer Wärme bzw. in einer Hitze gearbeitet, d. h. die Vorformlinge nach der Extrusion bis zur Fertigstellung des Hohlkörpers keine weitere Erwärmung erfahren, bietet sich die Verschweißung an.

Wie dies insbesondere Figur 7 zu entnehmen ist, sind die Teile des Trägers 4 und die Bauteilhalter 5a, 5b in der letzten Phase der Befestigung der Einbauteile 7 an der Innenwandung der Schalen 10a, 2b so positioniert, dass die Bauteilhalter 5a, 5b mit den an diesen befestigten Einbauteilen 7 aus der jeweiligen Trennebene 11 zwischen den Außenformen 2a, 2b und der Mittelform 3 herausstehen. Diese Trennebene 11 ist in dem beschriebenen Ausführungsbeispiel tatsächlich als Ebene dargestellt, grundsätzlich versteht der Fachmann jedoch unter dem Begriff "Trennebene" auch eine räumlich komplex verlaufende Trennfläche zwischen den Teilen des Werkzeugs.

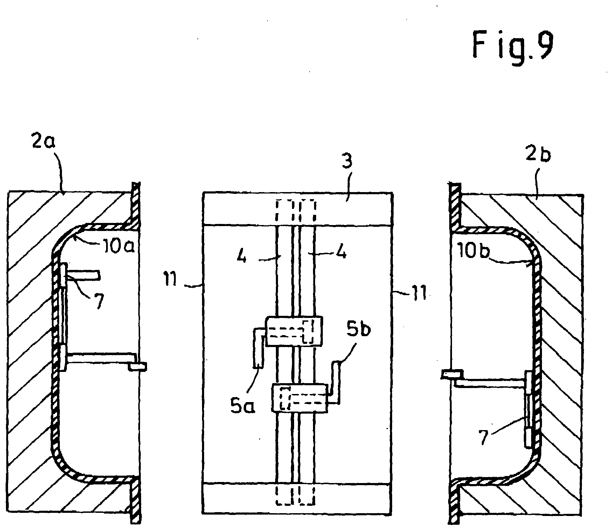

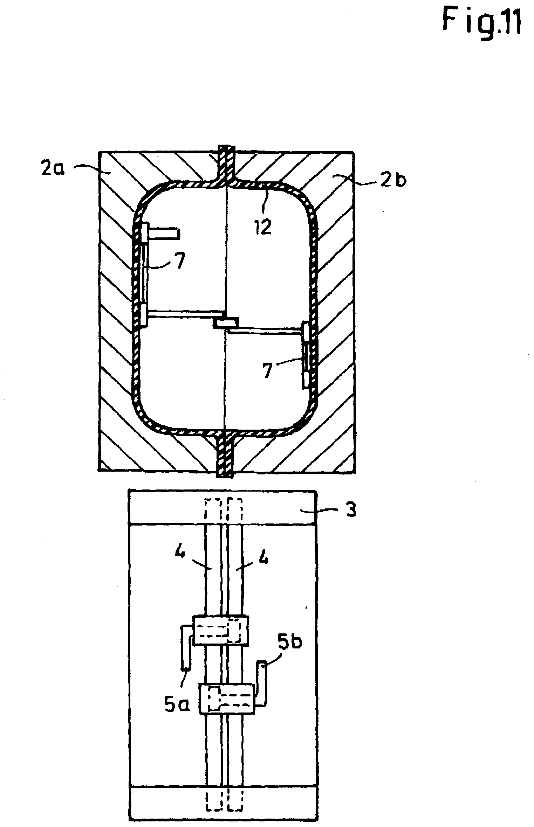

Nachdem die Teile des Trägers 4 und die Bauteilhalter 5a, 5b in die Ausgangslage zurückgefahren worden sind (Figur 8), werden die Außenformen 2a, 2b geöffnet (Figur 9) und die Mittelform 3 zwischen den Außenformen 2a, 2b entfernt bzw. verschoben, sodass die Außenformen 2a, 2b ungehindert zueinander eine Schließbewegung vollziehen können, wie dies in Figur 11 dargestellt ist. Beim Schließen der Außenformen 2a, 2b zueinander werden einerseits die Schalen 10a, 2b zu dem fertigen Artikel 12 zusammengefügt, andererseits werden die jeweils in den Schalen 10a, 2b angeordneten Einbauteile 7 miteinander in Wirkverbindung gebracht. Dies kann auf verschiedene Art und Weise geschehen, wie nachstehend noch erläutert wird.

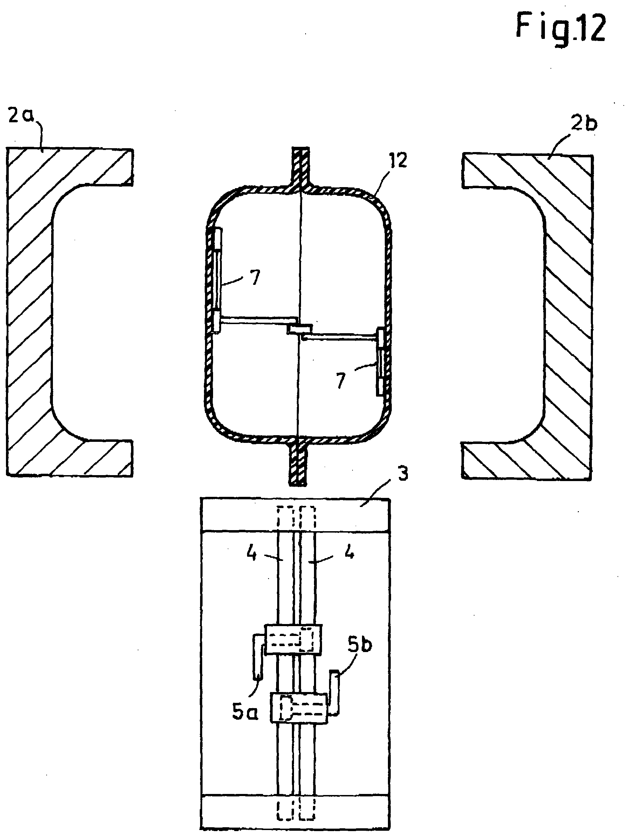

In Figur 12 ist schließlich die Entnahme des fertigen Artikels 12 aus dem Werkzeug 1 dargestellt.

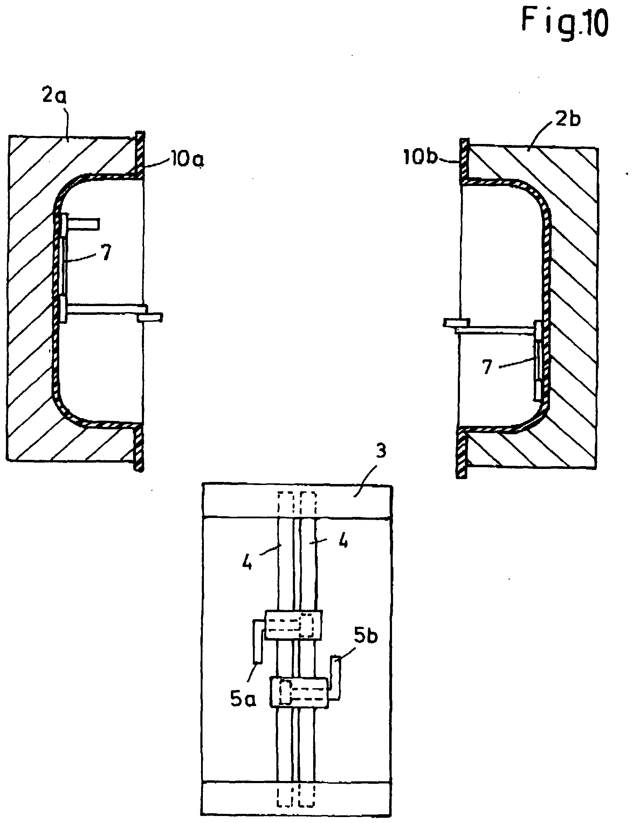

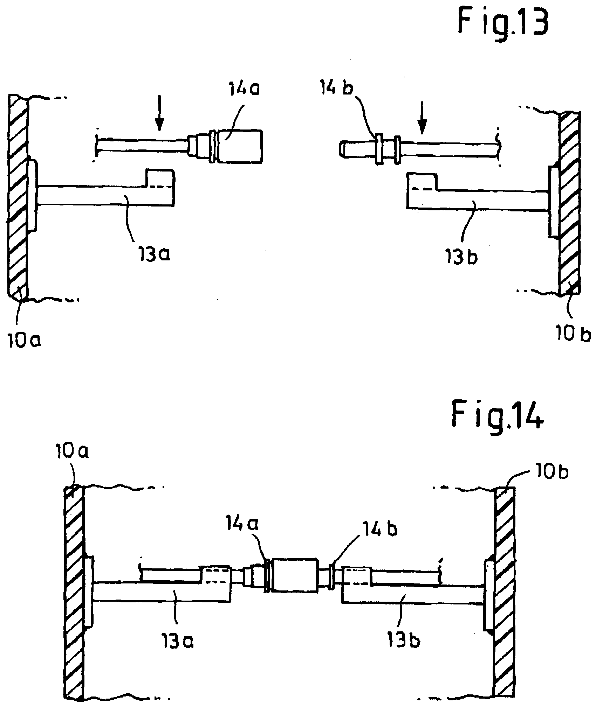

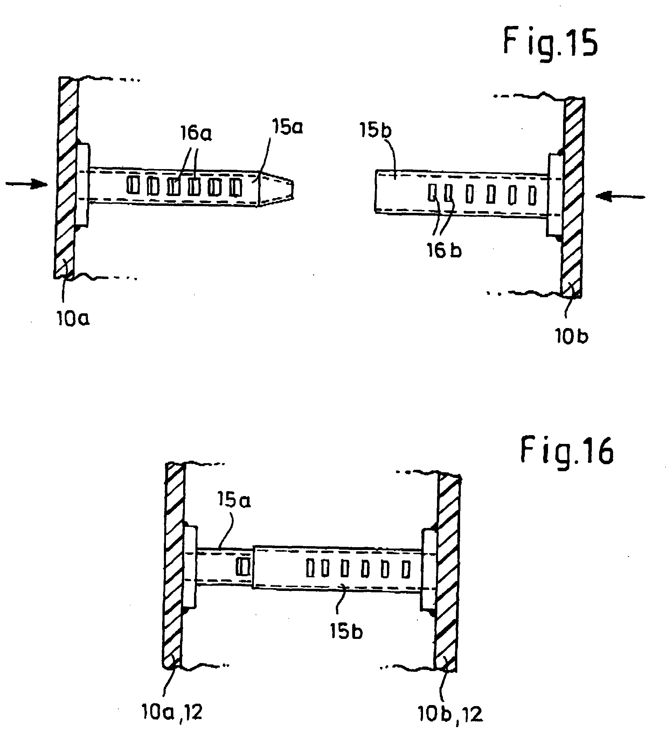

Eine mögliche Ausbildung der Einbauteile 7 ist in den Figuren 13 und 14 dargestellt. Als zueinander komplementäre Einbauteile 7 sind dort Haltelemente 13a, 13b dargestellt, die jeweils gemäß der vorstehend beschriebenen Art und Weise auf der Innenwandung der Schalen 10a, 10b platziert werden, wobei das Halteelement 13a die Kupplung 14a und das Haltelement 13b den Stecker 14b einer Leitungsverbindung aufnimmt. Sowohl die Kupplung 14a als auch der Stecker 14b sind so auf den Halteelementen 13a, 13 b angeordnet, dass die Kupplung 14a und der Stecker 14b beim Zusammenfahren der Außenformen 2a, 2b (Figuren 10 und 11) miteinander in Eingriff gebracht werden. Es ist für den Fachmann ersichtlich, dass es hierzu erforderlich ist, die Halteelemente 13a, 13b bzw. die Einbauteile 7 so in den Schalen 10a, 10b zu platzieren, dass das Zustandebringen einer Wirkverbindung beim Zusammenfahren der Außenformen 2a, 2b möglich ist. Auch müssen die miteinander zu verbindenden Teile entsprechend toleriert sein, wie dies beispielsweise anhand des in Figuren 15 und 16 dargestellten Ausführungsbeispiels klar wird.

Die in Figur 15 dargestellten Einbauteile 7 stellen einen Zuganker dar, der aus einem Rastzapfen 15a und einer hülsenförmigen Rastaufnahme 15b besteht. Der Rastzapfen 15a ist mit Rastvorsprüngen 16a versehen, wohingegen die Rastaufnahme 15b entsprechende Rastausnehmungen 16b aufweist. Beide Teile des Zugankers werden bei der Herstellung des Hohlkörpers an der jeweiligen Innenwandung der Schalen 10, 2b so zueinander positioniert bzw. platziert, dass diese exakt gegenüberliegend angeordnet sind. Werden die Außenformen 2a, 2b gegeneinander geschlossen, taucht der Rastzapfen 15a in die gegenüberliegend angeordnete Rastaufnahme 15b ein, die Rastvorsprünge 16a werden in den entsprechend ausgebildeten Rastausnehmungen 16b verriegelt. Auf diese Art und Weise werden die Schalen 10a, 2b, die die gegenüberliegenden Wandungen des fertigen Behälters darstellen, unlösbar miteinander verstrebt.

### Bezugszeichen

- 1.: Werkzeug
- 2a, 2b: Außenformen
- 3: Mittelform
- 4: Träger
- 5a, 5b: Bauteilhalter
- 6: Pneumatikzylinder
- 7: Einbauteile
- 8: Vorformlinge
- 9a, 9b: Teilkavitäten
- 10a, 10b: Schalen
- 11: Trennebene
- 12: Artikel
- 13a, 13b: Haltelemente
- 14a: Kupplung
- 14b: Stecker
- 15a: Rastzapfen
- 15b: Rastaufnahme
- 16a: Rastvorsprünge
- 16b: Rastausnehmungen

## Patentansprüche

1. Verfahren zur Herstellung von Hohlkörpern aus thermoplastischem Kunststoff, bei welchem Vorformlinge aus plastifiziertem Kunststoff in einem mehrteiligen, ein Formnest bildenden Werkzeug durch Aufweiten und Anlegen der Vorformlinge an die Innenkontur des Formnestes umgeformt werden, wobei das Verfahren zunächst die Ausbildung zweier zueinander komplementärer Zwischenerzeugnisse in Form von Schalen umfasst und an den jeweils in Einbaulage einander zugekehrten Innenseiten der Schalen jeweils wenigstens ein Einbauteil befestigt wird, **dadurch gekennzeichnet, dass** als Vorformling bahn- oder bänderförmige Vorformlinge verwendet werden und wenigstens einige Einbauteile zueinander komplementärer Schalen jeweils komplementär zueinander ausgebildet sind, in dem Sinne, dass sie zu einem zusammengesetzten Bauteil oder zu einer Funktionseinheit verbindbar sind, und weiterhin die Schalen so zusammengefügt werden, dass die zueinander komplementären Einbauteile beim Zusammenführen der Schalen ineinander greifen und/oder in Wirkverbindung miteinander gelangen.

2. Verfahren nach Anspruch 1, **dadurch gekennzeichnet, dass** das Herstellen und Verbinden der Schalen in der ersten Hitze ohne weitere Erwärmung der Vorformlinge erfolgt.

3. Verfahren nach einem der Ansprüche 1 oder 2, **dadurch gekennzeichnet, dass** die Vorformlinge in einem mehrteiligen Formwerkzeug umgeformt werden, welches wenigstens zwei Außenformen und wenigstens eine Mittelform umfasst, die zueinander eine Öffnungs- und Schließbewegung vollziehen, wobei die Außenformen jeweils die die Konturen der Schalen vorgebenden Teilkavitäten bilden und die Mittelform mit wenigstens einem Bauteilhalter versehen ist, über welchen nach dem Ausformen der Schalen die Einbauteile an den Innenseiten der Schalen platziert werden.

4. Verfahren nach Anspruch 3, **dadurch gekennzeichnet, dass** die Mittelform nach dem Platzieren der Einbauteile zwischen den Außenformen entfernt wird und anschließend die Außenformen so gegeneinander geschlossen werden, dass die Schalen und wenigstens einige der in diesen angeordneten Einbauteile miteinander in Wirkverbindung gelangen.

5. Verfahren nach einem der Ansprüche 1 bis 4, **dadurch gekennzeichnet, dass** als zueinander komplementäre Einbauteile den Hohlkörper stabilisierende Verstrebungselemente Anwendung finden, die bei Verbindung der Schalen miteinander verrastet werden.

6. Verfahren nach einem der Ansprüche 1 bis 5, **dadurch gekennzeichnet, dass** als zueinander komplementäre Einbauteile Halteelemente Anwendung finden, die jeweils Kupplungen von elektrischen Leitungen oder Fluidleitungen aufnehmen, wobei die Anordnungen umfassend jeweils ein Halteelement und ein Leitungsabschnitt mit Kupplung so auf der Innenseite der Schalen platziert werden, dass die Kupplungen beim Zusammenfügen der Schalen ineinander greifen.

7. Verfahren nach einem der Ansprüche 1 bis 6, **dadurch gekennzeichnet, dass** als zueinander komplementäre Einbauteile Schwalleinbauten, vorzugsweise in Form von ineinandergreifenden Schwallwänden oder Schwallwandanordnungen Anwendung finden.

## Claims

1. Method for manufacturing hollow elements from a thermoplastic material, in which shaping blanks (8) in plastified plastic in a multi-part tool (1) in the form of a shaping nest, are opened out and placed against the inner contour of the shaping nest and moulded, whereby the method firstly consists in producing two intermediary products, which are complementary in relation to each other, in the form of dishes (10a, 10b), with the inner sides of the dishes (10a, 10b) in their respective positions facing each other and onto which at least one fitted element (7) is attached,
**characterised in that** the shaping blanks (8) used are in the form of tracks or strips and at least several fitted elements (7) are arranged in a complementary manner in relation to each other in relation to the complementary dishes (10a, 10b) in the sense that they can be combined to form a composite component (12) or a functional unit and further that the dishes (10a, 10b) can be joined together in such a way that the two complementary fitted elements (7) when joining the dishes engage with each other and/or come together in a working contact.

2. Method according to Claim 1 above, **characterised in that** the manufacture and the combination of the dishes (10a, 10b) takes place in the first heating stage without any prior heating of the blanks (8).

3. Method according to Claim 1 or 2 above, **characterised in that** the blanks (8) are shaped in a multi-part shaping tool (1), which comprises at least two outer forms (2a, 2b) and at least one central form (3), which effect an opening and closing movement in relation to each other, whereby the outer forms (2a, 2b) respectively constitute the part cavities that form the contours of the dishes (10a, 10b) and the central form (3) is provided with at least one component holder, by means of which after the shaping (2a, 2b) of the dishes (10a, 10b), the fitted elements (7) can be arranged on the insides of the dishes (10a, 10b).

4. Method according to Claim 3 above, **characterised in that** the central form (3) is removed after the fitted elements (7) have been arranged between the outer forms (2a, 2b) and finally the outer forms (2a, 2b) can be closed together in such a way that the dishes (10a, 10b) and at least some of the fitted elements (7) arranged in the latter come into working contact with each other.

5. Method according to any one of the above Claims 1 to 4 **characterised in that** complementary fitted elements (7) serve as reinforcing elements to stabilise the hollow element and lock together as the dishes (10a, 10b) are joined.

6. Method according to any of the above Claims 1 to 5 **characterised in that** the complementary fitting elements (7) are supporting elements, which can receive couplings (14a, 14b) of electrical connections or fluid connections, whereby the arrangements comprising respectively one supporting element and one connection section with a coupling (14a, 14b) can be arranged in such a way on the inside of the dishes (10a, 10b) that when the dishes (10a, 10b) are joined together the couplings engage with each other.

7. Method according to any of the above Claims 1 to 6, **characterised in that** the complementary fitting elements (7) are in the form of baffle fittings, preferably in the form of interconnecting baffle walls or baffle wall arrangements.

## Revendications

1. Procédé de fabrication de corps creux en matière thermoplastique, pour lequel des ébauches (8) en matière synthétique plastifiée sont reformées dans un outil (1) à plusieurs parties, formant une cavité de moule par élargissement et application des ébauches (8) contre le contour intérieur de la cavité de moule, le procédé comportant tout d'abord la réalisation de deux produits intermédiaires complémentaires l'un à l'autre sous la forme de coques (10a, 10b) et respectivement au moins un élément de montage (7) étant fixé sur les côtés intérieurs des coques (10a, 10b) tournés l'un vers l'autre respectivement en position de montage,
**caractérisé en ce que** des ébauches (8) en forme de bande ou de ruban sont utilisées comme ébauche et au moins quelques éléments de montage (7) de coques (10a, 10b) complémentaires l'une à l'autre sont réalisés respectivement de manière complémentaire les uns aux autres au sens qu'ils peuvent être reliés en un élément composé (12) ou en une unité fonctionnelle, et les coques (10a, 10b) sont en outre assemblées de sorte que les éléments de montage (7) complémentaires les uns à aux autres dans la fusion des coques s'engagent les uns dans les autres et/ou parviennent en liaison active les uns avec les autres.

2. Procédé selon la revendication 1, **caractérisé en ce que** la fabrication et la liaison des coques (10a, 10b) sont effectuées lors du premier chauffage sans autre chauffage des ébauches (8).

3. Procédé selon l'une quelconque des revendications 1 ou 2, **caractérisé en ce que** les ébauches (8) sont reformées dans un outil de formage à plusieurs parties (1), lequel comporte au moins deux moules extérieurs (2a, 2b) et au moins un moule médian (3) qui accomplissent l'un vers l'autre un mouvement d'ouverture et de fermeture, les moules extérieurs (2a, 2b) formant respectivement les cavités partielles prescrivant les contours des coques (10a, 10b) et le moule médian (3) étant pourvu d'au moins un support de composant, par lequel, après le démoulage (2a, 2b) des coques (10a, 10b), les éléments de montage (7) sont placés sur les côtés intérieurs des coques (10a, 10b).

4. Procédé selon la revendication 3, **caractérisé en ce que** le moule médian (3) est retiré après le placement des éléments de montage (3) entre les moules extérieurs (2a, 2b) puis les moules extérieurs (2a, 2b) sont fermés les uns contre les autres de sorte que les coques (10a, 10b) et au moins quelques-uns des éléments de montage (7) agencés dans celles-ci parviennent en liaison active les uns avec les autres.

5. Procédé selon l'une quelconque des revendications 1 à 4, **caractérisé en ce que** des éléments d'entretoise stabilisant le corps creux sont utilisés comme des éléments de montage (7) complémentaires les uns aux autres, lesquels sont encliquetés les uns avec les autres lors de la liaison des coques (10a, 10b).

6. Procédé selon l'une quelconque des revendications 1 à 5, **caractérisé en ce que** des éléments de retenue sont utilisés comme des éléments de montage (7) complémentaires les uns aux autres, lesquels reçoivent respectivement des couplages (14a, 14b) de câbles électriques ou conduites de fluide, les agencements comprenant respectivement un élément de retenue et un tronçon de conduit avec couplage (14a, 14b) étant placés sur le côté intérieur des coques (10a, 10b) de sorte que les couplages (14a, 14b) s'engagent les uns dans les autres lors de l'assemblage des coques (10a, 10b).

7. Procédé selon l'une quelconque des revendications 1 à 6, **caractérisé en ce que** des composants déflecteurs de préférence sous la forme de brise-lames ou d'agencements de brise-lames venant en prise les uns dans les autres sont utilisés comme des éléments de montage (7) complémentaires les uns aux autres.
